(19) Europäisches Patentamt / European Patent Office / Office européen des brevets

(11) **EP 3 596 581 B1**

## (12) FASCICULE DE BREVET EUROPEEN

(45) Date de publication et mention de la délivrance du brevet:
**05.03.2025   Bulletin 2025/10**

(21) Numéro de dépôt: **18724957.8**

(22) Date de dépôt: **23.04.2018**

(51) Classification Internationale des Brevets (IPC):
**G06F 3/01** *(2006.01)*

(52) Classification Coopérative des Brevets (CPC):
**G06F 3/016;** G06F 2203/014; G06F 2203/04808;
G06F 2203/04809

(86) Numéro de dépôt international:
**PCT/FR2018/051011**

(87) Numéro de publication internationale:
**WO 2018/197793 (01.11.2018 Gazette 2018/44)**

(54) **INTERFACE DE STIMULATION TACTILE PAR RETOURNEMENT TEMPOREL OFFRANT DES SENSATIONS ENRICHIES**

SCHNITTSTELLE ZUR TAKTILEN STIMULATION UNTER VERWENDUNG VON ZEITUMKEHRUNG UND ZUR BEREITSTELLUNG VON GESTEIGERTEN EMPFINDUNGEN

TACTILE STIMULATION INTERFACE USING TIME REVERSAL AND PROVIDING ENHANCED SENSATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.04.2017   FR 1753537**

(43) Date de publication de la demande:
**22.01.2020   Bulletin 2020/04**

(73) Titulaire: **Commissariat à l'Energie Atomique et aux Energies Alternatives**
**75015 Paris (FR)**

(72) Inventeurs:
- **HUDIN, Charles**
  **75013 Paris (FR)**
- **BOLZMACHER, Christian**
  **92120 Montrouge (FR)**
- **HAFEZ, Moustapha**
  **94110 Arcueil (FR)**
- **ZOPHONIASSON, Harald**
  **91940 Les Ulis (FR)**

(74) Mandataire: **Brevalex**
**Tour Trinity**
**1 B Place de la Défense**
**92400 Courbevoie (FR)**

(56) Documents cités:
WO-A1-2013/182611      US-A1- 2008 024 459
US-A1- 2011 141 052      US-A1- 2011 199 342
US-A1- 2012 326 999      US-A1- 2016 246 374

- IWAMOTO T ET AL: "Two-dimensional Scanning Tactile Display using Ultrasound Radiation Pressure", HAPTIC INTERFACES FOR VIRTUAL ENVIRONMENT AND TELEOPERATOR SYSTEMS, 20 06 14TH SYMPOSIUM ON ALEXANDRIA, VA, USA 25-26 MARCH 2006, PISCATAWAY, NJ, USA,IEEE, 25 March 2006 (2006-03-25), pages 57 - 61, XP010913491, ISBN: 978-1-4244-0226-7, DOI: 10.1109/ HAPTIC.2006.1627070
- INOUE SEKI ET AL: "Producing airborne ultrasonic 3D tactile image by time reversal field rendering", 2014 PROCEEDINGS OF THE SICE ANNUAL CONFERENCE (SICE), SICE, 9 September 2014 (2014-09-09), pages 1360 - 1365, XP032668829, DOI: 10.1109/SICE.2014.6935269

**Description**

## DOMAINE TECHNIQUE ET ÉTAT DE LA TECHNIQUE ANTÉRIEURE

La présente invention se rapporte à une interface de stimulation tactile par retournement temporel offrant des sensations enrichies et à un procédé de commande d'une telle interface.

Une interface de stimulation tactile est destinée à restituer une information tactile, telle qu'une texture, un relief, une rugosité variable dans le temps et/ou l'espace, une illusion d'appuyer sur un matériau souple, de presser une touche.

De telles interfaces sont utilisées par exemple dans le domaine des interfaces homme-machines. Elles peuvent également être utilisées dans les domaines de l'optique, de l'acoustique, de la chimie, et de la fabrication automatisée...

Certaines interfaces utilisent un réseau d'actionneurs, par exemple piézoélectriques ou électrostatiques, disposés sous la surface dans les zones où les doigts sont destinés à venir en contact. Lorsque l'un des actionneurs est activé, toute la surface est mise en vibration, et l'utilisateur touchant la surface avec plusieurs doigts, ressent la même stimulation sur tous les doigts.

WO 2013/182611 A1 décrit une interface de stimulation tactile par retournement temporel, permettant l'affichage de stimuli tactiles de formes et de dimensions variables.

US 2012/0326999 A1 décrit un dispositif d'interface tactile qui comprend une surface tactile conçue pour se trouver en contact avec un objet, des premier et second ensembles d'actionnement fonctionnellement couplés à la surface tactile, et une unité de commande fonctionnellement couplée aux premier et second ensembles d'actionnement. L'unité de commande agit sur les premier et second ensembles d'actionnement de sorte que la surface tactile ait un contact variable avec l'objet afin d'appliquer une force sur l'objet se trouvant sur la surface tactile.

US 2011/0199342 A1 décrit un appareil et un procédé permettant de fournir des sensations sans contact surélevées, indentées ou texturées à un objet à distance d'un dispositif d'affichage à l'aide d'ondes ultrasonores. Des procédés impliquant des sensations élevées, indentées ou texturées sur un objet à proximité d'un dispositif d'affichage ou en contact avec un dispositif d'affichage à l'aide d'ultrasons aéroportés ou d'ondes ultrasonores sont également décrits.

Il existe des interfaces tactiles utilisant le procédé de retournement temporel, par exemple décrites dans le document C. Hudin, J. Lozada, et V. Hayward, « Localized Tactile Feedback on a Transparent Surface through Time-Reversal Wave Focusing », IEEE Transactions on Haptics, vol. 8, n° 2, p. 188-198, avr. 2015. L'interface comporte une plaque de verre et des actionneurs disposés en contact avec et en périphérie de la plaque de verre. Les actionneurs piézoélectriques propagent des ondes acoustiques dans la plaque de verre. La mise en œuvre d'un procédé de retournement temporel présente l'avantage de permettre de générer une vibration de manière localisée sur la surface de la plaque et permet de stimuler séparément les différents doigts, ce retour tactile est également désigné « retour tactile localisé multitouch ».

Ce document propose de répéter le procédé de focalisation par retournement temporel afin de former un train d'impulsions de déplacement de la surface afin d'offrir une stimulation intensifiée.

On cherche à enrichir davantage les sensations ressenties par l'utilisateur.

## EXPOSÉ DE L'INVENTION

C'est par conséquent un but de la présente invention d'offrir une interface de stimulation tactile permettant de générer des stimulations différentes en différents endroits de l'interface et offrant des sensations enrichies.

Le but énoncé ci-dessus est atteint par une interface tactile de stimulation tactile selon la revendication 1 et par un procédé de commande d'une interface tactile de stimulation tactile selon la revendication 9. Ce document décrit aussi une de stimulation tactile mettant en œuvre un procédé de retournement temporel, ladite interface comportant une surface destinée à être explorée tactilement par un utilisateur et au moins un actionneur destiné à appliquer un effort à la surface, des moyens de commande dudit actionneur, lesdits moyens de commande déterminant l'effort par le procédé de retournement temporel. Les moyens de commande envoient des signaux de commande audit actionneur de sorte que, pour générer une même stimulation, le au moins un actionneur génère des impulsions par focalisation d'ondes acoustiques en un point dont l'emplacement à la surface varie au cours du temps. Les différents emplacements des impulsions sont situés dans la zone couverte par exemple par la pulpe du doigt en contact avec la surface.

En d'autres termes, les moyens de commande commandent l'actionneur de sorte à moduler au moins spatialement l'emplacement du point de focalisation pour générer le même motif haptique, ce qui permet de restituer une large gamme de sensations tactiles.

En effet, les inventeurs ont constaté que la dimension perçue du point de focalisation par l'utilisateur était de l'ordre de 1 mm à 2 mm, inférieure à la taille réelle de la tâche de focalisation qui est de l'ordre de 5 mm. Ils ont alors déterminé qu'en déplaçant au cours du temps le point de focalisation pour générer la même stimulation, la dimension spatiale perçue par l'utilisateur était plus importante, ce qui permettait d'offrir un retour vibrotactile plus riche que par la focalisation répétée au même point de la surface. La stimulation est par exemple des cliques de formes et d'amplitudes perçues variables, une certaine raideur pour reproduire l'enfoncement d'un bouton, une texture...

Cette modulation spatiale du point de focalisation est rendue possible grâce à la bonne résolution spatiale du procédé de retournement temporel.

Par exemple, le déplacement du point d'impulsion a lieu sous la zone de contact, par exemple sous la pulpe du doigt qui explore la surface. Par exemple, la distance entre deux points de focalisation est comprise entre $100\mu m$ et 1mm.

En réalisant un déplacement rapide du point, un objet plus grand que la taille d'un point peut être simulé

De manière préférée, une étape d'apprentissage permet d'établir une base de données des réponses impulsionnelles retournées en un certain nombre de points de la surface par exemple répartis sous forme de grille, et les réponses impulsionnelles entre les points de la base de données sont déterminées par interpolation spatiale.

De manière très avantageuse, la focalisation peut être répétée dans le temps et modulée dans le temps et/ou en amplitude.

En outre, l'effort appliqué par exemple par le ou les doigts et/ou leur position peut ou peuvent être pris en compte pour moduler spatialement et avantageusement temporellement la focalisation.

La surface est par exemple portée par une plaque en verre

De manière préférentielle les actionneurs, par exemple piézoélectriques, sont en contact avec le bord extérieur de la plaque en verre. La surface peut alors être transparente et peut être celle d'un écran tactile.

La présente invention a alors pour objet une interface de stimulation tactile comportant une surface destinée à être explorée tactilement par au moins un organe d'un utilisateur, au moins un actionneur destiné à appliquer un effort sur ladite surface, et des moyens de commande dudit au moins un actionneur, lesdits moyens de commande étant destinés à envoyer à l'actionneur des signaux correspondant aux efforts à appliquer à ladite surface en fonction de la stimulation tactile à générer sur la surface, lesdits efforts étant déterminés par un procédé de retournement temporel. Les moyens de commande sont tels que, pour au moins un motif tactile donné, ledit au moins un actionneur est commandé de sorte qu'il génère en au moins une zone de ladite surface, des impulsions par focalisation d'au moins une onde acoustique en un point dont l'emplacement à la surface varie au cours du temps, de sorte à stimuler tactilement ledit organe selon le motif tactile donné.

De manière avantageuse, les moyens de commande sont aptes à commander ledit au moins un actionneur de sorte à ce qu'il génère en plusieurs zones distinctes des impulsions par focalisation d'ondes acoustiques en un point dont l'emplacement à la surface varie au cours du temps, de sorte à stimuler tactilement plusieurs organes selon des motifs tactiles donnés.

L'interface de stimulation tactile peut avantageusement comporter des moyens de détection de la présence dudit au moins un organe destiné à être stimulé tactilement, les moyens de détection étant par exemple de type capacitif, et/ou des moyens de détection de la force de contact entre le au moins un organe destiné à être stimulé tactilement et la surface.

L'interface de stimulation tactile peut comporter plusieurs actionneurs.

Dans un exemple de réalisation, la surface est portée par une plaque, le ou les actionneurs étant situés en contact avec la plaque au niveau d'au moins un bord de celle-ci. Avantageusement la plaque est transparente.

La présente invention a également pour objet un procédé de commande d'une interface de stimulation tactile selon l'invention, de sorte à stimuler tactilement au moins un organe selon un motif tactile donné dans au moins une première zone de la surface, comportant une modulation spatiale d'au moins un point de focalisation d'au moins une onde acoustique générée par ledit au moins un actionneur.

Le procédé peut comporter les étapes :

    a) détermination d'une réponse impulsionnelle retournée pour un premier point de ladite zone,
    b) convolution de ladite réponse impulsionnelle retournée audit motif tactile donné,
    c) génération d'un signal sur la base du résultat de ladite convolution et envoi dudit signal audit au moins un actionneur et génération d'impulsions audit premier point,
    d) répétition des étapes a), b) et c) pour n autres points de ladite zone, n étant un entier supérieur ou égal à 1, au moins un point des n points étant distinct du premier point.

Les étapes a), b), c) et d) peuvent être réalisées simultanément pour la première zone et pour une deuxième zone distincte de la première zone, et lors de l'étape c) le signal envoyé audit actionneur et la somme du signal généré pour la première zone et le signal généré pour la deuxième zone.

De manière avantageuse, la force exercée par l'organe sur la surface est mesurée et est prise en compte dans la génération du signal.

Selon une caractéristique de l'invention, le motif peut présenter une amplitude variable et/ou une fréquence de génération des impulsions variable.

Dans un exemple de réalisation, lors de l'étape a), la réponse impulsionnelle retournée est choisie dans une base de données.

Dans un autre exemple de réalisation, lors de l'étape a), la réponse impulsionnelle retournée est déterminée par interpolation entre au moins deux réponses impulsionnelles retournées choisies dans une base de données.

De manière avantageuse, la présence de l'organe destiné à être stimulé tactilement est détectée préalablement à l'étape a).

**BRÈVE DESCRIPTION DES DESSINS**

La présente invention sera mieux comprise sur la base de la description qui va suivre et des dessins en annexe sur lesquels:

- la figure 1A est une vue de dessus d'un exemple de réalisation d'une interface de stimulation tactile,
- la figure 1B est une vue en coupe de la figure 1A selon le plan A-A,
- la figure 1C est une vue de détail de la figure 1B au niveau d'un actionneur,
- la figure 2 est une représentation schématique des points de focalisation successifs pouvant être excités par une interface tactile selon l'invention,
- les figures 3A à 3F sont des représentations schématiques d'exemples de modulation temporelle de l'amplitude du déplacement en µm au point de focalisation en fonction du temps en ms à différentes fréquences,
- la figure 4 est une représentation schématique d'un exemple de procédé de commande d'une interface de stimulation tactile selon l'invention,
- la figure 5 est une représentation schématique d'un exemple de modulation spatiale du point de focalisation,
- la figure 6 est une représentation schématique d'un autre exemple de modulation spatiale du point de focalisation,
- la figure 7 est une représentation schématique d'un autre exemple de modulation spatiale du point de focalisation.

**EXPOSÉ DÉTAILLÉ DE MODES DE RÉALISATION PARTICULIERS**

Dans la présente demande, on considère, à des fins de simplicité, que la surface tactile est destinée à être touchée par la pulpe d'un doigt D ou de plusieurs doigts Mais la surface de l'interface selon l'invention est apte à appliquer une stimulation à toute partie du corps de l'utilisateur sensible au sens du toucher.

En outre, dans la présente demande on entend par « motif tactile » ou « retour tactile » un ensemble de déplacements générés dans une zone de stimulation de la surface de l'interface résultant de l'activation des actionneurs, ressenti par la ou les parties du corps en contact avec la surface, afin de reproduire une sensation telle qu'un bouton qui s'enfonce, une texture, un clique...

On entend par « point de focalisation », le point où les ondes acoustiques sont focalisées et qui est le siège d'un déplacement de grande amplitude de la surface, et par « zone de stimulation » la zone où l'on souhaite générer le motif tactile en générant successivement plusieurs points de focalisation pour reproduire un même motif haptique.

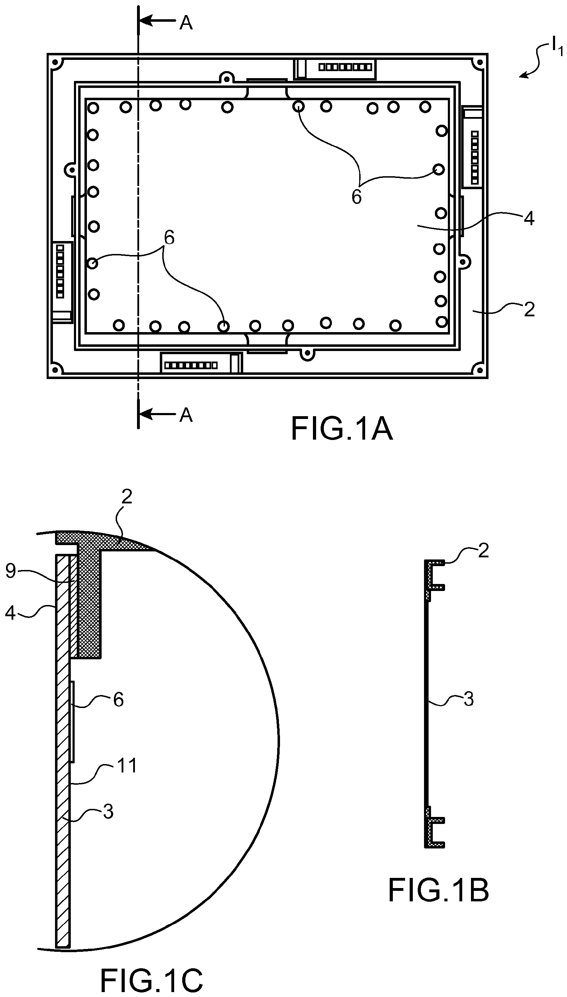

Sur les figures 1A à 1C, on peut voir un premier exemple de réalisation d'une interface tactile selon l'invention.

L'interface tactile I1 comporte un cadre 2, un élément 3 muni d'une surface 4 maintenue sur le cadre 2, et sur laquelle par exemple un ou des doigts peuvent venir en contact, et des actionneurs 6 fixés sur l'élément 3 et aptes à appliquer une contrainte mécanique à la surface 4, la contrainte étant orientée transversalement par rapport à la surface. La partie suspendue de la surface 4 forme une surface destinée à être explorée tactilement.

L'élément 3 est, dans l'exemple représenté, sous forme d'une plaque.

Le cadre forme un support rigide pour la plaque 3. De manière avantageuse, un matériau amortissant 9, est interposé entre la plaque 3 et le cadre. Avantageusement le matériau amortissant 9 est une mousse adhésive, qui en plus d'atténuer les vibrations dans la plaque 3, maintient la plaque 3 sur le cadre.

Les actionneurs 6 sont fixés, par exemple par collage sur la face 11 de la plaque 3 opposée à la surface 4. Dans l'exemple représenté, les actionneurs sont montés le long des bords de la plaque. Dans un autre exemple, les actionneurs pourraient être disposés en tout point de l'élément 3. En outre les actionneurs pourraient être sur la surface tactile 4.

La surface 4 est destinée à être le siège d'ondes de flexion ou d'ondes transversales générées par les contraintes appliquées par les actionneurs. Selon l'invention, les ondes de flexion sont focalisées de sorte à produire une stimulation tactile au point de focalisation.

L'élément 3 portant la surface 4 est par exemple un substrat rigide transparent ou non. Le substrat peut être plan ou incurvé. Le substrat peut comporter un ou plusieurs matériaux. En outre il peut avoir une épaisseur comprise entre 0,1 mm et 5 mm.

Par exemple, l'élément 3 portant la surface 4 est par exemple une plaque transparente en verre, en polycarbonate, en PMMA, ou non-transparente en métal, en céramique, plastique ou autre.

La mise en œuvre d'un substrat transparent permet par exemple d'adapter l'interface à un écran, par exemple à un écran d'une tablette tactile.

Dans l'exemple représenté, les actionneurs sont des actionneurs piézoélectriques. Ils comportent un matériau piézoélectrique et deux électrodes de part et d'autre du matériau piézoélectrique permettant de lui appliquer une différence de potentiel. L'application d'une différence de potentiel aux bornes de l'actionneur piézoélectrique produit à la surface de la plaque des efforts tangentiels à la plaque. Cet effort courbe la surface de la plaque. Il en résulte un déplacement dans la direction perpendiculaire au plan de la surface.

En variante, les actionneurs peuvent être électromagnétiques. Dans ce cas, un effort perpendiculaire au plan de la surface est produit par l'action d'un champ électromagnétique sur un aimant. L'aimant ou la bobine est solidaire de la surface.

Dans l'exemple représenté, l'interface comporte trente-deux actionneurs, cependant ce nombre n'est pas limitatif. On peut par exemple prévoir 1, 10 ou plusieurs dizaines d'actionneurs, par exemple 40, répartis sur le support le long des bords de la plaque.

L'interface comporte également une unité de commande UC destinée à générer des signaux aux actionneurs afin qu'ils appliquent des efforts à la surface, de sorte à générer des ondes de flexion en un point de focalisation donné.

Les efforts appliqués par les actionneurs 6 sur la surface 4 sont calculés par un procédé de retournement temporel, ce qui permet aux actionneurs de générer des ondes interférant de façon constructives en un ou plusieurs point(s) donnés de la surface et à un instant souhaité. L'utilisateur ressent, non pas les ondes se propageant dans la plaque mais l'impulsion produite au(x) point(s) et à l'instant souhaité due à l'interférence constructive. Le gain des actionneurs est réglé de sorte que l'amplitude partout ailleurs, en dehors du point de focalisation, soit telle qu'on ne perçoive pas la vibration. Le contraste, qui désigne le rapport de l'amplitude au point de focalisation par l'amplitude quadratique moyenne en tout autre point, est donc une grandeur critique qu'il convient de maximiser pour produire une stimulation clairement perçue au point de focalisation sans créer de stimulus en un autre point. Dans l'exemple présenté, le contraste pour une focalisation unique vaut C=43 et l'amplitude au point de focalisation atteint a=14 μm.

La mousse adhésive, présente dans l'exemple, sert d'une part à maintenir la plaque sur son support et d'autre part à atténuer les vibrations de celle-ci. Cette atténuation permet de réduire la constante d'atténuation $\tau$ et donc de diminuer la période de répétition de focalisation $T_r$ sans altérer le contraste de focalisation répétée $\hat{C}$, conformément à l'expression donnée plus bas. Cette atténuation peut être également ajustée par un choix approprié de matériau pour la plaque ou par l'ajout d'un film à sa surface.

De manière avantageuse, des capteurs détectant la présence des doigts de l'utilisateur sur l'interface peuvent également être mis en œuvre, ce qui permet de ne générer une stimulation tactile que dans les zones en cours d'exploration par les doigts. La consommation électrique de l'interface peut alors être réduite, ce qui est particulièrement intéressant dans le cas d'interfaces de stimulation tactile appliquées à des appareils portables. Il peut s'agir par exemple de capteurs optiques ou capacitifs.

La détection de la position du doigt est par exemple obtenue par des moyens capacitifs, la plaque portant la surface formant une des plaques d'un condensateur à capacité variable et la pulpe du doigt forme l'autre plaque. En outre il est possible de suivre le déplacement des doigts.

Un dispositif capable de mesurer la valeur de la force d'interaction exercée localement ou sur la globalité de l'interface peut également être ajouté, afin de lier les impulsions produites par focalisation aux efforts exercés par le ou les doigts en contact avec la plaque.

Nous allons décrire brièvement le principe de la focalisation par retournement temporel.

Le principe du retournement temporel des ondes repose sur l'invariance de l'équation de propagation d'ondes par renversement du temps et sur le principe de réciprocité.

Soit $h(x_a|x_q,y_a|y_q,t)$ le déplacement hors plan de la surface enregistré au cours du temps t en un point de coordonnées $(x_a,y_a)$ après qu'un signal impulsionnel a été émis par un actionneur en $(x_q,y_q)$. On appelle $h(x_a|x_q,y_a|y_q,t)$ la réponse impulsionnelle entre les points *a* et q.

En considérant que la réponse du système plaque et actionneur est linéaire, si l'actionneur situé en q émet non plus une impulsion mais un signal $s_q(t)$, le déplacement au point *a* en est alors donné par : $u(x_a,y_a,t)=h(x_a|x_q,y_a|y_q,t)\otimes s_q(t)$ avec $\otimes$ l'opérateur de convolution.

Ainsi, si l'actionneur situé en q émet, non plus une impulsion mais la réponse impulsionnelle retournée temporellement depuis l'instant T jusqu'à l'instant initial *t* = 0, soit

$$s_q(t) = h\big(x_a\big|x_q, y_a\big|y_q, T - t\big) \text{ avec } 0 < t < T,$$

le déplacement produit en un point b quelconque sera :

$$u(x_b,y_b,t) = h\big(x_b\big|x_q, y_b\big|y_q, t\big) \otimes s_q(t) = h\big(x_b\big|x_q, y_b\big|y_q, t\big) \otimes h\big(x_a\big|x_q, y_a\big|y_q, T - t\big)$$

$$= \int_0^t h\big(x_b\big|x_q, y_b\big|y_q, t - \xi\big)\, h\big(x_a\big|x_q, y_a\big|y_q, T - \xi\big) d\xi$$

Le déplacement est ainsi le résultat de l'intégrale du produit de deux fonctions qui ne sont a priori pas corrélées, dont le résultat est donc de moyenne nulle. On a en un point b et un instant t quelconques un déplacement de moyenne nulle qui constitue une vibration de fond présente sur l'ensemble de la plaque. En revanche, à l'instant $t = T$ correspondant à la fin de la phase d'émission par l'actionneur, on obtient au point $a$ un déplacement :

$$u(x_a, y_a, T) = \int_0^T h(x_a|x_q, y_a|y_q, T - \xi)^2 d\xi$$

On intègre cette fois une quantité strictement positive. Le résultat est un déplacement non nul de grande amplitude. Ce déplacement est obtenu uniquement au point $a$ et à l'instant $T$, d'où la focalisation des ondes dans l'espace et dans le temps.

Dans le cas où Q actionneurs sont utilisés, leurs contributions s'additionnent pour donner :

$$u(x, y, t) = \sum_{q=1}^{Q} u_q(x, y, t)$$

Le contraste est défini comme le rapport entre le déplacement au point de focalisation au temps T et l'écart type de ce déplacement en un point quelconque b. Il est obtenu par la relation :

$$C = \sqrt{BT_c} \sqrt{\frac{Q\tau(1 - e^{-2T/\tau})}{(Q + 1)\tau\left(1 - e^{-\frac{2T}{\tau}}\right) + T_c}}$$

Avec $Q$ le nombre d'actionneurs, $T$ la durée de la fenêtre de retournement, $\tau$ la constant de temps d'atténuation des vibrations dans la plaque et $T_c$ le temps caractéristique de la plaque ou densité modale de la plaque en secondes, ou mode propre par Hz et $B = f_{max} - f_{min}$ la bande passante, en hertz des signaux émis par les actionneurs.

Dès lors que la focalisation est répétée dans le temps avec une période $T_r$, le contraste est affecté selon la relation :

$$\hat{C} = C\sqrt{1 - e^{-2T_r/\tau}}$$

Pour préserver le contraste, les focalisations successives sont répétées avec une période $T_r \geq \tau$.

La fréquence moyenne des signaux définie la résolution maximale atteignable par la relation :

$$R_s = \sqrt[4]{\frac{D}{\rho_s}} \sqrt{\frac{8}{2\pi f_m}}$$

$$f_m = \frac{f_{max} + f_{min}}{2}$$

Avec $R_s$ la résolution spatiale, ou largeur à mi-hauteur du point de focalisation, la fréquence moyenne des signaux émis, D la rigidité en flexion et $\rho_s$ la masse par unité de surface de la plaque. Les réponses impulsionnelles h(t) peuvent être obtenues soit de façon expérimentale en enregistrant effectivement les réponses impulsionnelles, soit par simulation, soit de manière analytique lorsque la géométrie reste simple.

On réalise ensuite une base de données des réponses impulsionnelles retournées en différents points de la surface, cette base de données est utilisée pour générer les signaux envoyés aux actionneurs. Il peut s'agir de tous points de la surface ou selon un maillage très serré, afin d'offrir une grande résolution dans la stimulation. En variante et de manière particulièrement avantageuse, on réalise une base de données des réponses impulsionnelles en un nombre de points donnés de la surface, par exemple réparti sous la forme d'une grille ou un contour de la surface et on détermine les réponses impulsionnelles entre les points de la grille, par exemple par interpolation, ce qui permet ainsi de déterminer une réponse impulsionnelle en tout point de la surface, et de réduire le temps de réalisation de la base de données et sa taille.

L'interpolation peut se faire suivant différentes méthodes, par exemple il peut s'agir d'une interpolation de Fourier, de la méthode « Compressed Sensing », les méthodes des solutions fondamentales, ou une méthode s'appuyant sur une forme variationnelle de l'équation de propagation.

La durée des déplacements de la surface est variable, par exemple de l'ordre de 10 ms à 100 ms, selon le motif à reproduire et le contraste souhaité, et les efforts peuvent être répétés à fréquence et amplitude voulues. Le contraste et l'amplitude obtenus au point de focalisation dépendent de la dimension de l'interface, de l'amortissement des vibrations et du nombre d'actionneurs. Le nombre d'actionneurs peut être choisi en fonction de l'interface.

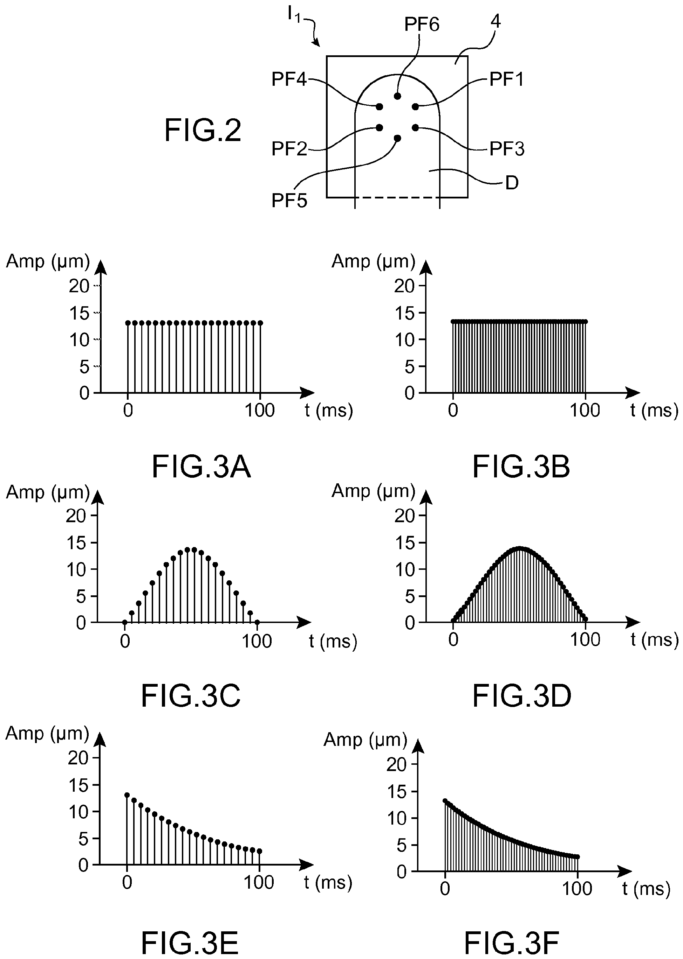

Selon l'invention, pour un même motif tactile, également désigné « événement de stimulation », on prévoit de moduler spatialement le point de focalisation, i.e. de déplacer le point de focalisation dans le zone de stimulation. Dans l'état de la technique pour obtenir un motif haptique, le ou les actionneurs sont commandés pour provoquer un déplacement de la surface en un point unique de la surface ce déplacement pouvant être répété dans le temps. Selon l'invention, le déplacement de la surface a lieu successivement en des points différents de la surface situés dans la zone de stimulation en contact avec la pulpe du doigt. Par exemple, sur la figure 2, on peut voir un doigt sur une surface et en transparence les différents emplacements du point de focalisation $PF_i$, l'indice i correspondant à l'ordre de survenance du déplacement de l'emplacement au cours de l'événement de stimulation.

Par exemple, la pulpe du doigt est en contact avec la surface ayant une aire de 1 cm$^2$, cette zone correspondant à la zone de stimulation, et le point de focalisation est déplacé successivement dans la zone de stimulation de 1 cm$^2$. Par exemple la distance entre les deux emplacements successifs du point de focalisation est de l'ordre du 0,1 mm à 1 mm. Les inventeurs ont déterminé que la taille de chaque point de focalisation ressentie réellement par l'utilisateur était entre 0,1 mm et 2 mm, qui est sensiblement inférieure à la taille de la tâche de focalisation qui est la zone mise en mouvement par la focalisation des ondes constructives. Ceci est par exemple confirmé par le document G. Von Bekesy, "Similarities between hearing and skin sensations," Psychological review, vol. 66, no. 1, pp. 1-22, Jan. 1959 qui montre un déplacement étendu spatialement mais de courte durée est perçu comme ponctuel. Ainsi en déplaçant le point où les ondes sont focalisées, la zone stimulée de la pulpe du doigt est plus grande que celle d'un seul point de focalisation fixe, ce qui améliore le ressentie et permet de générer des motifs complexes et donc d'enrichir la communication. Le déplacement du point de focalisation a pour effet d'exciter plus de mécanorécepteurs et de produire un stimulus plus intense.

La disposition relative des points de focalisation peut être variable. Par exemple cette disposition peut correspondre à un cercle, une spirale, un triangle, un carré, un hexagone, une ligne droite ou courbe.... Il est à noter que, selon l'invention, l'utilisateur ne distingue pas cette forme, mais celle-ci est choisie pour rendre plus riche la stimulation.

Cette modulation de l'emplacement du point de focalisation permet d'enrichir sensiblement la gamme des sensations tactiles ressenties par l'utilisateur.

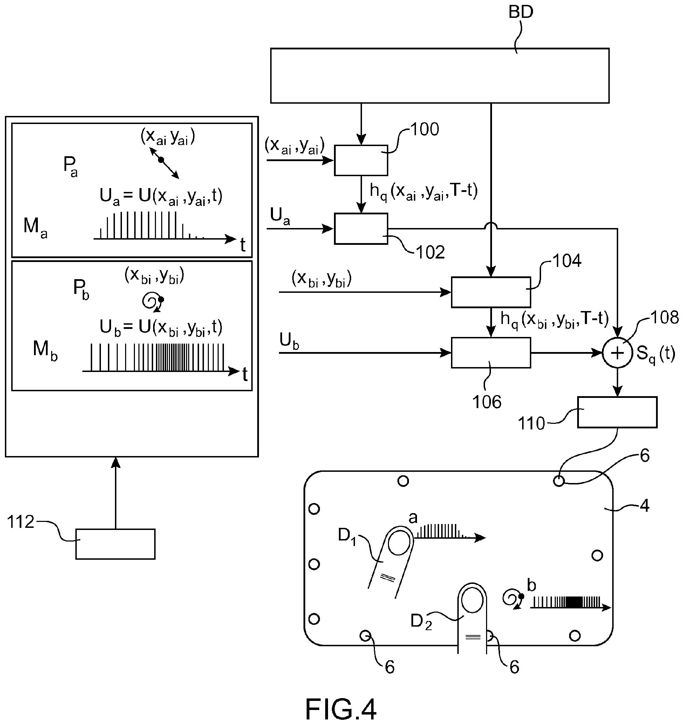

Sur la figure 4, on peut voir une représentation schématique du procédé de génération de signaux à des actionneurs d'une interface tactile selon l'invention.

Dans l'exemple représenté, l'unité de commande génère simultanément de zones de stimulation a et b pour deux doigts D1 et D2.

On souhaite générer un premier motif tactile dans la zone a et un deuxième motif tactile dans la zone b. Selon l'invention, pour au moins un motif on associe plusieurs points de focalisation dans chaque zone de stimulation. Il sera compris que l'interface peut comporter des motifs comportant plusieurs points de focalisation.

Chaque zone comporte une carte de génération Pa, Pb des points de focalisation. Pour la zone a, les point de focalisation sont désignés PFai, et pour la zone b, les points de focalisation sont désignés PFbi, i désignant l'ordre de génération du point. Pour la zone a, les points de focalisation seront répartis sur une droite et pour la zone b, les points de focalisation seront répartis sur une spirale. Toute autre répartition est envisageable. Comme cela a été expliqué ci-dessus, l'utilisateur n'est pas apte à ressentir le type de répartition des points, il ressent uniquement une stimulation tactile.

Dans un exemple de réalisation, la répartition des points de focalisation peut être variable dans une même zone au cours du temps.

L'emplacement de chaque point de focalisation est déterminé par ses coordonnées dans le repère (x, y) désignées (xai, yai) et (xbi, ybi).

Chaque motif est défini par une amplitude de déplacement de la surface à chaque point de focalisation et par une fréquence de répétition des points de focalisation, la fréquence et l'amplitude pouvant être constante ou variable.

Dans l'exemple représenté, le motif dans la zone a est défini par la fonction Ua(xai, yai, t) et le motif dans la zone b est défini par la fonction Ub(xbi, ybi, t).

Dans l'exemple représenté sur la figure 4, le motif dans la zone a présente une variation d'amplitude à fréquence constante et le motif dans la zone b présente une amplitude constante à fréquence variable.

Il sera compris que les motifs peuvent être de tout type et par exemple présenter une amplitude variable à fréquence variable. En outre, les caractéristiques du motif peuvent être modifiées en fonction d'autres paramètres tels que la force exercée par le doigt sur la surface comme cela sera décrit ci-dessous.

Dans une première étape, on peut détecter le contact du ou des doigts avec la surface, de sorte à ne générer une stimulation qu'en présence de doigts.

Dans une étape suivante, le signal à envoyer à chaque actionneur est déterminé.

Pour la zone a et le motif Ua, on souhaite exciter le point PFa1 en premier.

Tout d'abord on recherche dans la base de données BD des réponses impulsionnelles retournées, la réponse impulsionnelle retournée au point Pfa1. Soit la réponse existe, car elle a été déterminée préalablement, soit elle est déterminée par interpolation spatiale comme cela a été expliqué ci-dessus (étape 100). Cette réponse est désignée hq(xai, yai, T-t).

Chaque réponse impulsionnelle est ensuite convoluée au motif temporel Ua (étape 102).

Les mêmes étapes sont réalisées pour la zone b au point PFb1 (étapes 104 et 106), la réponse impulsionnelle retournée est convoluée au motif Ub.

Un signal correspondant à la somme des signaux calculés pour chaque point (étape 108) est envoyé à un actionneur. Dans le cas où il y aurait plusieurs actionneurs dans la surface cet ensemble d'opérations est réalisé simultanément pour chaque actionneur de la surface. Chaque actionneur émet une réponse impulsionnelle qui lui est propre, dépendant notamment de sa position dans la surface et du type d'actionneur.

De manière très avantageuse, une étape d'amplification 110 du signal a lieu.

Les étapes ci-dessus sont répétées pour tous les points de focalisation PFa2 à PFan et PFb2 à PFbn.

Dans l'exemple représenté, les fréquences de génération des points de focalisation PFai et PFbi varient au cours du temps et sont différentes l'une de l'autre.

Chaque zone a et b comporte alors un nuage de points de focalisation, les points de focalisation étant excités successivement.

La durée d'excitation de chaque point de focalisation peut varier d'un point de focalisation à l'autre.

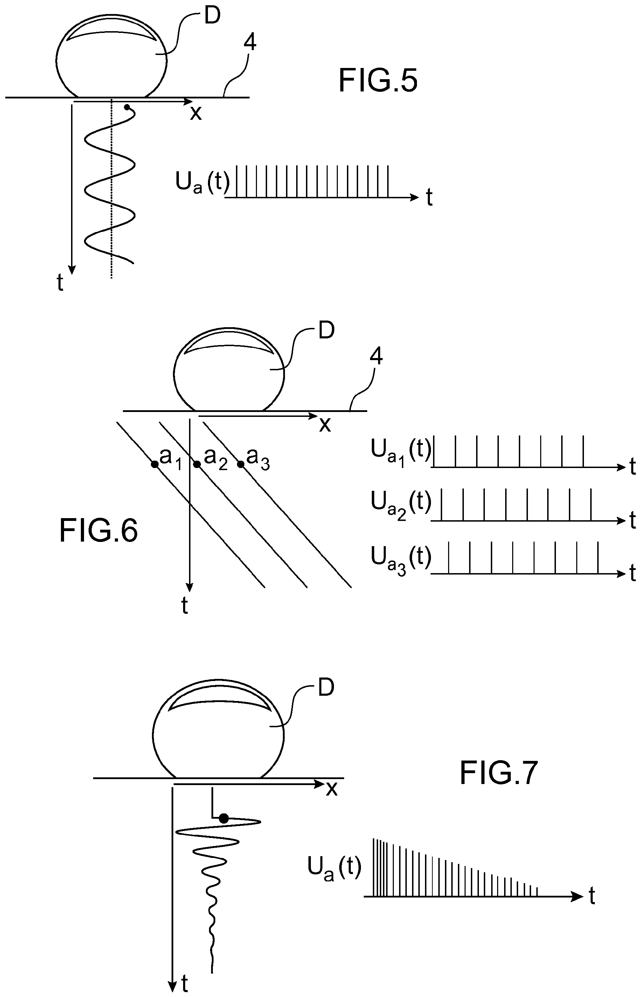

Sur la figure 5, on peut voir un exemple de modulation spatiale et temporelle du point de focalisation le long de l'axe X. On peut voir l'emplacement successif des points de focalisation PFai par exemple. Dans cet exemple, les points de focalisation réapparaissent périodiquement aux mêmes endroits. En outre le motif Ua est représenté, il présente une amplitude constante et une fréquence de génération des points de focalisation constante.

Sur la figure 6, on peut voir un autre exemple de modulation spatiale et temporelle du point de focalisation le long de l'axe X.

Dans cet exemple, on considère trois points de focalisation a1, a2, a3 glissants, qui se déplacent au cours du temps. Le déplacement de chaque point au cours du temps est linéaire et seul un des points est activé. La focalisation au point a1 alterne avec celle aux points a2 et a3. Les amplitudes sont les mêmes aux points a1, a2, a3. Les motifs pour chaque point sont désignés Ua1, Ua2, Ua3. L'amplitude ressentie est maximale.

Il en résulte que les points traversent la zone a.

Dans les exemples des figures 5 et 6, les points de focalisation sont disposés sur une ligne, mais ils pourraient être disposés selon un motif en deux dimensions, par exemple sur un cercle.

Sur la figure 7, les points de focalisation sont générés sur une ligne avec une amplitude qui évolue. Les points de focalisation pourraient être disposés selon un motif en deux dimensions, par exemple sur un cercle.

Sur les figures 3A à 3F, on peut voir différents exemples de modulation temporelle de l'amplitude Amp de déplacement en $\mu$m au point de focalisation en fonction du temps t en ms. Pour les modulations des figures 3A, 3C, et 3F, la fréquence est par exemple de 200 Hz et pour les modulations des figures 3B, 3D et 3F, la fréquence est par exemple de 500 Hz.

Sur les figure 3A et 3B, les modulations temporelles sont des répétitions du déplacement à une même amplitude et à fréquence constante, qui correspond à un motif agressif. Parmi tous les déplacements PF$_i$, au moins deux ont lieu en des emplacements différents.

Sur les figure 3C et 3D, les modulations temporelles sont des répétitions du déplacement à une amplitude croissante, puis décroissante et à fréquence constante, qui correspond à un motif progressif. Parmi tous les déplacements PF$_i$, au moins deux ont lieu en des emplacements différents.

Sur les figures 3E et 3F, les modulations temporelles sont des répétitions du déplacement à une amplitude décroissante et à une même fréquence, qui correspond à un motif agressif au début, qui se radoucit progressivement. Parmi tous les déplacements PFi, au moins deux ont lieu en des emplacements différents.

Il sera compris que pour chaque événement de stimulation, la focalisation a lieu en au moins deux points de focalisation différents. On peut donc envisager que, pour un évènement de stimulation, 10 points de focalisation soient excités mais seuls deux soient en des emplacements différents.

De manière également très avantageuse, on peut prévoir de moduler les caractéristiques du déplacement en fonction de la valeur de la force appliquée par le doigt de l'utilisateur et la position du doigt (étape 112). Par exemple, si on produit une focalisation à chaque fois que l'effort exercé franchi un seuil, on produit l'illusion d'appuyer sur une surface ayant une certaine raideur. C'est cette méthode qui permet la restitution d'une sensation de raideur. Une force d'appui élevée permet de focaliser sur une surface plus importante.

L'interface comporte avantageusement des moyens pour déterminer la force appliquée par l'utilisateur sur la surface. Par exemple, on peut utiliser un capteur d'effort intégré au support de la plaque ce qui permet de mesurer l'effort total appliqué sur la surface. Pour une mesure de l'effort exercé localement, une matrice de capteurs piézorésistifs par exemple pourrait être utilisée.

De manière avantageuse, l'interface peut en outre comporter un ou plusieurs capteurs. Par exemple, il peut s'agir d'un capteur de température de l'environnement dans lequel se trouve l'interface. En effet la température peut modifier la vitesse de propagation des ondes dans la surface. Cette information de température peut donc servir à corriger les signaux envoyés aux actionneurs pour tenir compte de cette modification de vitesse de propagation.

L'invention peut également être utilisée, de manière très avantageuse, pour guider les mouvements de l'utilisateur ou de l'utilisatrice. Par exemple, une diminution de l'amplitude de focalisation discrétisée sur une ligne permet de guider un doigt vers cette direction. Une amplitude faible donne l'impression de faciliter un mouvement du doigt vers la direction à amplitude diminuante, ce qui incite l'utilisateur ou l'utilisatrice à déplacer son doigt dans cette direction.

## Revendications

1. Interface tactile de stimulation tactile comportant une surface (4) destinée à être explorée tactilement par au moins un organe d'un utilisateur, au moins un actionneur (6) destiné à appliquer un effort sur ladite surface (4), et des moyens de commande dudit au moins un actionneur, lesdits moyens de commande étant destinés à envoyer à l'actionneur (6) des signaux correspondant aux efforts à appliquer à ladite surface en fonction de la stimulation tactile à générer sur la surface, lesdits efforts étant déterminés par un procédé de retournement temporel, l'interface de stimulation tactile étant **caractérisée en ce que**, pour au moins une stimulation tactile dans une zone de stimulation donnée (a, b) de la surface, ladite zone de stimulation étant en contact avec l'organe de l'utilisateur selon un motif tactile donné, les moyens de commande sont configurés pour commander ledit au moins un actionneur (4) de sorte qu'il génère en ladite au moins une zone de stimulation donnée (a, b) de la surface en contact avec l'organe de l'utilisateur, des impulsions par focalisation d'au moins une onde acoustique en un point dont l'emplacement à la surface dans ladite zone de stimulation donnée varie au cours du temps, de sorte à stimuler tactilement ledit organe selon le motif tactile donné.

2. Interface tactile de stimulation tactile selon la revendication 1, dans laquelle la zone de stimulation donnée correspond à une surface sensiblement égale à celle de l'organe de l'utilisateur.

3. Interface tactile de stimulation tactile selon la revendication 1 ou 2, dans laquelle les moyens de commande sont configurer pour commander ledit au moins un actionneur de sorte à ce qu'il génère en plusieurs zones de stimulation données distinctes des impulsions par focalisation d'ondes acoustiques en un point de chaque zone de stimulation donnée, dont l'emplacement à la surface varie dans une zone de stimulation donnée au cours du temps, de sorte à stimuler tactilement plusieurs organes selon des motifs tactiles donnés.

4. Interface tactile de stimulation tactile selon la revendication 1, 2 ou 3, comportant des moyens de détection de la présence dudit au moins un organe destiné à être stimulé tactilement, les moyens de détection étant par exemple de type capacitif.

5. Interface tactile de stimulation tactile selon l'une des revendications 1 à 4, comportant des moyens de détection de la force de contact entre le au moins un organe destiné à être stimulé tactilement et la surface.

6. Interface tactile de stimulation tactile selon l'une des revendications 1 à 5, comportant plusieurs actionneurs (6).

7. Interface tactile de stimulation tactile selon l'une des revendications 1 à 6, dans laquelle la surface est portée par une plaque, le ou les actionneurs (6) étant situés en contact avec la plaque au niveau d'au moins un bord de celle-ci.

8. Interface tactile de stimulation tactile selon la revendication 7, dans laquelle la plaque est transparente.

9. Procédé de commande d'une interface tactile de stimulation tactile selon l'une des revendications 1 à 8, de sorte à stimuler tactilement au moins un organe selon un motif tactile donné dans au moins une première zone de stimulation donnée de la surface, comportant une modulation spatiale d'au moins un point de focalisation d'au moins une onde acoustique générée par ledit au moins un actionneur.

10. Procédé de commande d'une interface tactile de stimulation tactile selon la revendication 9, de sorte à stimuler tactilement au moins un organe selon un motif tactile donné dans au moins une première zone de stimulation donnée de la surface, comportant les étapes :

a) détermination d'une réponse impulsionnelle retournée pour un premier point de ladite zone de stimulation donnée,

b) convolution de ladite réponse impulsionnelle retournée audit motif tactile donné,

c) génération d'un signal sur la base du résultat de ladite convolution et envoi dudit signal audit au moins un actionneur et génération d'impulsions audit premier point,

d) répétition des étapes a), b) et c) pour n autres points de ladite zone de stimulation donnée, n étant un entier supérieur ou égal à 1, au moins un point des n points étant distinct du premier point.

11. Procédé de commande selon la revendication 10, dans lequel les étapes a), b), c) et d) sont réalisées simultanément pour la première zone de stimulation donnée et pour une deuxième zone de stimulation donnée distincte de la première zone de stimulation donnée, et lors de l'étape c) le signal envoyé audit actionneur et la somme du signal généré pour la première zone de stimulation donnée et le signal généré pour la deuxième zone de stimulation donnée.

12. Procédé de commande selon l'une des revendications 9 à 11, dans lequel la force exercée par l'organe sur la surface est mesurée et est prise en compte dans la génération du signal.

13. Procédé de commande selon l'une des revendications 9 à 12, dans lequel le motif présente une amplitude variable et/ou une fréquence de génération des impulsions variable.

14. Procédé de commande selon l'une des revendications 9 à 13, dans lequel, lors de l'étape a), la réponse impulsionnelle retournée est choisie dans une base de données.

15. Procédé de commande selon l'une des revendications 9 à 14, dans lequel, lors de l'étape a), la réponse impulsionnelle retournée est déterminée par interpolation entre au moins deux réponses impulsionnelles retournées choisies dans une base de données.

## Patentansprüche

1. Taktile Schnittstelle zur taktilen Stimulation, die eine Fläche (4), die dazu bestimmt ist, durch mindestens ein Organ eines Benutzers taktil erkundet zu werden, mindestens einen Aktor (6), der dazu bestimmt ist, eine Kraft an die Fläche (4) anzulegen, und Steuermittel für den mindestens einen Aktor umfasst, wobei die Steuermittel dazu bestimmt sind, Signale an den Aktor (6) zu senden, die den in Abhängigkeit von der taktilen Stimulation, die auf der Fläche erzeugt werden soll, an die Fläche anzulegenden Kräften entsprechen, wobei die Kräfte über ein Zeitumkehrverfahren bestimmt werden,
wobei die Schnittstelle zur taktilen Stimulation **dadurch gekennzeichnet ist, dass** die Steuermittel dazu konfiguriert sind, für mindestens eine taktile Stimulation in einem gegebenen Stimulationsbereich (a, b) der Fläche, wobei der Stimulationsbereich gemäß einem gegebenen taktilen Muster mit dem Organ des Benutzers in Kontakt steht, den mindestens einen Aktor (4) so zu steuern, dass er in dem mindestens einen gegebenen Stimulationsbereich (a, b) der Fläche, der mit dem Organ des Benutzers in Kontakt steht, Impulse durch Fokussierung mindestens einer Schallwelle an einem Punkt erzeugt, dessen Lage auf der Fläche in dem gegebenen Stimulationsbereich mit der Zeit variiert, um das Organ gemäß dem gegebenen taktilen Muster taktil zu stimulieren.

2. Taktile Schnittstelle zur taktilen Stimulation nach Anspruch 1, wobei der gegebene Stimulationsbereich einer Fläche entspricht, die im Wesentlichen gleich der des Organs des Benutzers ist.

3. Taktile Schnittstelle zur taktilen Stimulation nach Anspruch 1 oder 2, wobei die Steuermittel dazu konfiguriert sind, den mindestens einen Aktor so zu steuern, dass er in mehreren verschiedenen gegebenen Stimulationsbereichen Impulse durch Fokussierung von Schallwellen an einem Punkt jedes gegebenen Stimulationsbereichs erzeugt, dessen Lage auf der Fläche in einem gegebenen Stimulationsbereich mit der Zeit variiert, um mehrere Organe gemäß gegebenen taktilen Mustern taktil zu stimulieren.

4. Taktile Schnittstelle zur taktilen Stimulation nach Anspruch 1, 2 oder 3, die Mittel zum Detektieren der Anwesenheit des mindestens einen Organs, das dazu bestimmt ist, taktil stimuliert zu werden, umfasst, wobei die Detektionsmittel zum Beispiel kapazitiv sind.

**5.** Taktile Schnittstelle zur taktilen Stimulation nach einem der Ansprüche 1 bis 4, die Mittel zum Detektieren der Kontaktkraft zwischen dem mindestens einen Organ, das dazu bestimmt ist, taktil stimuliert zu werden, und der Fläche umfasst.

**6.** Taktile Schnittstelle zur taktilen Stimulation nach einem der Ansprüche 1 bis 5, die mehrere Aktoren (6) umfasst.

**7.** Taktile Schnittstelle zur taktilen Stimulation nach einem der Ansprüche 1 bis 6, wobei die Fläche von einer Platte getragen wird, wobei sich der oder die Aktor(en) (6) an mindestens einer Kante derselben mit der Platte in Kontakt befinden.

**8.** Taktile Schnittstelle zur taktilen Stimulation nach Anspruch 7, wobei die Platte transparent ist.

**9.** Verfahren zur Steuerung einer taktilen Schnittstelle zur taktilen Stimulation nach einem der Ansprüche 1 bis 8, um mindestens ein Organ gemäß einem gegebenen taktilen Muster in mindestens einem ersten gegebenen Stimulationsbereich der Fläche taktil zu stimulieren, das eine räumliche Modulation mindestens eines Fokuspunkts mindestens einer von dem mindestens einen Aktor erzeugten Schallwelle umfasst.

**10.** Verfahren zur Steuerung einer taktilen Schnittstelle zur taktilen Stimulation nach Anspruch 9, um mindestens ein Organ gemäß einem gegebenen taktilen Muster in mindestens einem ersten gegebenen Stimulationsbereich der Fläche taktil zu stimulieren, das die folgenden Schritte umfasst:

a) Bestimmen einer Impulsantwort, die für einen ersten Punkt des gegebenen Stimulationsbereichs zurückgegeben wird,
b) Falten der Impulsantwort, die für das gegebene taktile Muster zurückgegeben wird,
c) Erzeugen eines Signals auf Basis des Ergebnisses der Faltung und Senden des Signals an den mindestens einen Aktor und Erzeugen von Impulsen an dem ersten Punkt,
d) Wiederholen der Schritte a), b) und c) für n weitere Punkte des gegebenen Stimulationsbereichs, wobei n eine ganze Zahl größer oder gleich 1 ist, wobei mindestens ein Punkt der n Punkte von dem ersten Punkt verschieden ist.

**11.** Steuerungsverfahren nach Anspruch 10, wobei die Schritte a), b), c) und d) gleichzeitig für den ersten gegebenen Stimulationsbereich und für einen zweiten gegebenen Stimulationsbereich, der vom ersten gegebenen Stimulationsbereich verschieden ist, ausgeführt werden, und bei Schritt c) das an den Aktor gesendete Signal und die Summe des für den ersten gegebenen Stimulationsbereich erzeugten Signals und des für den zweiten gegebenen Stimulationsbereich erzeugten Signals.

**12.** Steuerungsverfahren nach einem der Ansprüche 9 bis 11, wobei die durch das Organ auf die Fläche ausgeübte Kraft gemessen und bei der Erzeugung des Signals berücksichtigt wird.

**13.** Steuerungsverfahren nach einem der Ansprüche 9 bis 12, wobei das Muster eine variable Amplitude und/oder eine variable Erzeugungsfrequenz der Impulse aufweist.

**14.** Steuerungsverfahren nach einem der Ansprüche 9 bis 13, wobei bei Schritt a) die zurückgegebene Impulsantwort aus einer Datenbank ausgewählt wird.

**15.** Steuerungsverfahren nach einem der Ansprüche 9 bis 14, wobei bei Schritt a) die zurückgegebene Impulsantwort durch Interpolation zwischen mindestens zwei aus einer Datenbank ausgewählten zurückgegebenen Impulsantworten bestimmt wird.

**Claims**

**1.** Tactile stimulation interface including a surface (4) intended to be explored tactilely by at least one of a user's organs, at least one actuator (6) intended to apply a force on said surface (4), and means for controlling said at least one actuator, said control means being intended to send the actuator (6) signals corresponding to the forces to be applied to said surface according to the tactile stimulation to be generated on the surface, said forces being determined by means of a time reversal method,
the tactile stimulation interface being **characterised in that**, for at least one tactile stimulation in a given stimulation zone (a, b) of the surface, said stimulation zone being in contact with the user's organ according to a given tactile pattern, the control means are configured to control said at least one actuator (4) such that it generates in said at least one given stimulation zone (a, b) of the surface in contact with the user's organ, pulses by focusing at least one acoustic wave at a point, the location of which on the surface in said given stimulation zone varies over time, so as to stimulate said organ tactilely according to the given tactile pattern.

2. Tactile stimulation interface according to claim 1, wherein the given stimulation zone corresponds to a surface area substantially equal to that of the user's organ.

3. Tactile stimulation interface according to claim 1 or 2, wherein the control means are configured to control said at least one actuator such that it generates in several different given stimulation zones pulses by focusing acoustic waves at a point of each given stimulation zone, the location of which on the surface varies in a given stimulation zone over time, so as to stimulate several organs tactilely according to given tactile patterns.

4. Tactile stimulation interface according to claim 1, 2 or 3, including means for detecting the presence of said at least one organ intended to be stimulated tactilely, the detection means being for example of capacitive type.

5. Tactile stimulation interface according to one of claims 1 to 4, including means for detecting the contact force between the at least one organ intended to be stimulated tactilely and the surface.

6. Tactile stimulation interface according to one of claims 1 to 5, including several actuators (6).

7. Tactile stimulation interface according to one of claims 1 to 6, wherein the surface is borne by a plate, the actuator (s) (6) being located in contact with the plate at the level of at least one edge thereof.

8. Tactile stimulation interface according to claim 7, wherein the plate is transparent.

9. Method for controlling a tactile stimulation interface according to one of claims 1 to 8, so as to stimulate at least one organ tactilely according to a given tactile pattern in at least a first given stimulation zone of the surface, including a spatial modulation of at least one focusing point of at least one acoustic wave generated by said at least one actuator.

10. Method for controlling a tactile stimulation interface according to claim 9, so as to stimulate at least one organ tactilely according to a given tactile pattern in at least a first given stimulation zone of the surface, including the steps of:

a) determining a reversed impulse response for a first point of said given stimulation zone,
b) convolving said reversed impulse response to said given tactile pattern,
c) generating a signal based on the result of said convolution and sending said signal to said at least one actuator and generating pulses at said first point,
d) repeating steps a), b) and c) for n other points of said given stimulation zone, n being an integer greater than or equal to 1, at least one point of the n points being different from the first point.

11. Control method according to claim 10, wherein steps a), b), c) and d) are carried out simultaneously for the first given stimulation zone and for a second given stimulation zone different from the first given stimulation zone, and during step c), the signal sent to said actuator and the sum of the signal generated for the first given stimulation zone and the signal generated for the second given stimulation zone.

12. Control method according to one of claims 9 to 11, wherein the force exerted by the organ on the surface is measured and is taken into account in the generation of the signal.

13. Control method according to one of claims 9 to 12, wherein the pattern has a variable amplitude and/or a variable pulse generation frequency.

14. Control method according to one of claims 9 to 13, wherein, during step a), the reversed impulse response is selected in a database.

15. Control method according to one of claims 9 to 14, wherein, during step a), the reversed impulse response is determined by interpolation between at least reversed impulse responses selected in a database.

FIG.1A

FIG.1C

FIG.1B

FIG.2

FIG.3A

FIG.3B

FIG.3C

FIG.3D

FIG.3E

FIG.3F

FIG.4

FIG.5

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013182611 A1
- US 20120326999 A1
- US 20110199342 A1

**Littérature non-brevet citée dans la description**

- **C. HUDIN** ; **J. LOZADA** ; **V. HAYWARD**. Localized Tactile Feedback on a Transparent Surface through Time-Reversal Wave Focusing. *IEEE Transactions on Haptics*, April 2015, vol. 8 (2), 188-198
- **G. VON BEKESY**. Similarities between hearing and skin sensations. *Psychological review*, January 1959, vol. 66 (1), 1-22